# EUROPEAN PATENT SPECIFICATION

(11) **EP 0 874 074 B1**
(45) Date of publication and mention of the grant of the patent: **20.03.2002**
(21) Application number: 98107055.0
(22) Date of filing: 17.04.1998
(51) Int. Cl.: D03D 47/27, F16H 55/06

(54) **Improved gearwheel of composite structure to control the gripper straps in looms and method for the construction thereof**
Zahnrad mit Verbundstruktur für die Kontrolle von Greiferbänden in Webmaschinen und Verfahren zur Herstellung
Roue dentée de structure composite pour contrôler les bandes à griffes des métiers à tisser et procédé de fabrication

(30) Priority: 24.04.1997 IT MI970960
(43) Date of publication of application: 28.10.1998
(73) Proprietor: Promatech S.p.A., 24020 Colzate (Bergamo) (IT)
(72) Inventor: Casarotto, Giuseppe, 24122 Bergamo (IT)
(74) Representative: Vatti, Paolo, Dr. Ing.

(56) References cited:
- EP-A- 0 504 803
- EP-A- 0 751 246
- GB-A- 1 510 792
- GB-A- 2 039 662

## Description

The present invention relates to an improved gearwheel to control the motion of the gripper straps in weaving looms. In particular, the invention concerns the composite structure of said gearwheel and the method to obtain the same.

As known, in modern textile machines - due to the very high speeds and the consequent high inertias involved - considerable problems often arise for what concerns the wear of the gripper straps and the wear of the gearwheels controlling their back and forth motion inside the shed. These problems have since long been faced, on one hand, mainly by carefully studying the geometries of the gearwheel teeth and of the strap slots engaging therewith and, on the other hand, by suitably selecting the materials used for the construction of the gearwheels and of the gripper straps. In spite of this, the solutions adopted up to date are still not fully satisfactory.

The fundamental requirements having to be satisfied by the above gearwheels mainly involve resistance to wear, lightness, dimensional stability and a high rigidity, some of these characteristics being in contrast.

Up to a while ago, to satisfy these requirements the gearwheels were normally obtained by moulding or casting of light alloys, or of synthetic plastic materials of different types: if, on one hand, such materials are sufficiently light as not to produce any excessive moments of inertia in the gearwheel, on the other hand they often suffer from scarce resistance to wear, from an exceedingly low coefficient of elasticity, and from an insufficient dimensional stability.

A first attempt to render compatible the different contrasting characteristics of these gearwheels is that disclosed in US-A-4,696,200. This patent proposes a gearwheel of composite structure, produced with a synthetic plastic material apt to guarantee its lightness, wherein the toothing is formed from sheet metal - a sufficiently stiff and wearproof material - suitably punched, bent and applied along the periphery of the plastic wheel. A similar solution is proposed in EP0751246 A.

Nevertheless, even said solution is not optimal, since the plastic material from which the wheel is produced is not apt to provide an adequate rigidity and dimensional stability and, furthermore, the combination of the sheet metal forming the toothing, with the wheel body of plastic material, may give rise to defects.

In actual fact, the solution proposed in the above patent has the merit to have disclosed the possibility of adopting a composite structure, but is still tied to conventional concepts and technologies which are not apt to fully profit from the advantages provided by composite structures.

The object of the present invention is to thus overcome the drawbacks of known technique, by supplying a gearwheel of improved composite structure.

Said object is reached with a gearwheel according to claim 1 to control the motion of the gripper straps in looms, which comprises a composite carrying structure obtained by sandwich interposition of a disk of highly resisting light material between two disks of carbon fibre, or of fiberglass, or of a metallic film, and a circular metal toothing applied along the periphery of said disk of highly resisting light material, the bond between said disks and with said metal toothing being ensured by a synthetic resin.

The invention also supplies a method according to claim 12 to construct a gearwheel of composite structure to control the motion of the gripper straps in looms, according to which a metal toothing is placed into a circular die, along its periphery, into the die there being positioned two disks of carbon fibre, or of fiberglass, or of a metallic film, with the interposition of a disk of highly resisting light material, and a synthetic resin being subsequently injected into the die, so as to impregnate said disks and to at least partially fill the grooves formed between the teeth of the metal toothing and the spaces between said teeth and the disks of carbon fibre.

Further characteristics and advantages of the present invention will anyhow be more evident from the following detailed description of some preferred embodiments thereof, given by way of example and illustrated on the accompanying drawings, in which:
Fig. 1 is an exploded perspective view of the gearwheel according to the invention, placing in evidence its structural composition;
Fig. 2 is an exploded longitudinal section and cross section (B-B) view of the gearwheel shown in fig. 1, illustrating in particular a first embodiment of its toothing;
Fig. 2A is a variant of the first embodiment of the toothing of the gearwheel shown in fig. 1; and
Fig. 3 is a section view, similar to that of fig. 2, of a second embodiment of the gearwheel according to the invention.

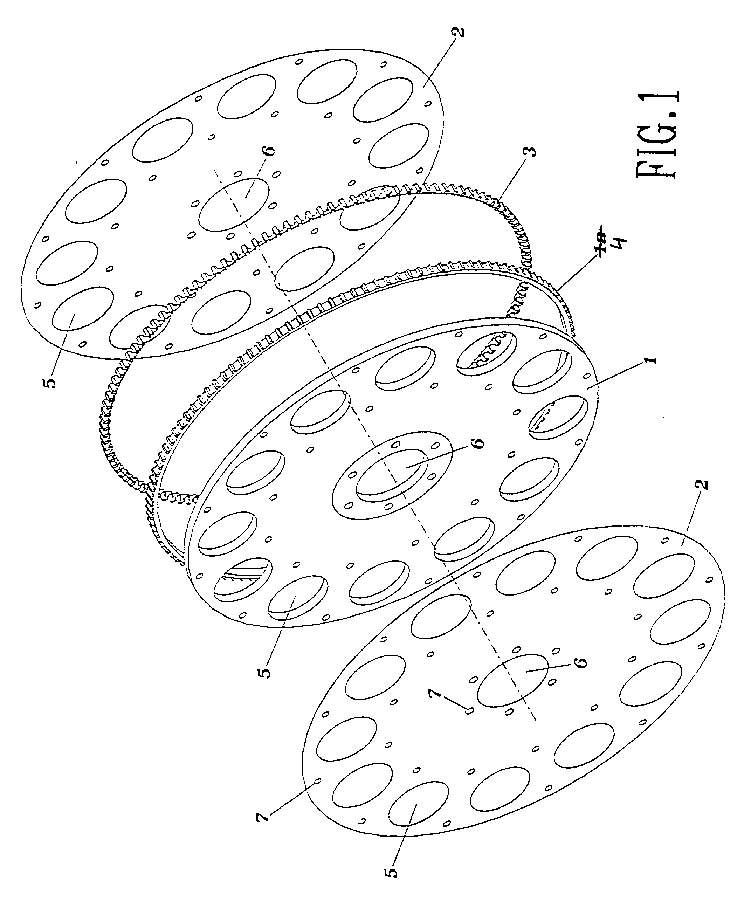

As shown in fig. 1, the gearwheel of the present invention consists of a round core in the form of a disk 1 of highly resisting light material - for example a low-density microcellular synthetic material - to the contour of which there is associated a sheet metal toothing 3, and of two disks 2 of carbon fibre between which is interposed the disk 1.

A synthetic resin 4 - preferably a thermosetting resin, such as an epoxy resin - keeps the above elements bonded together, after hardening by polymerization obtained with a known-type treatment, for example thermopolymerization.

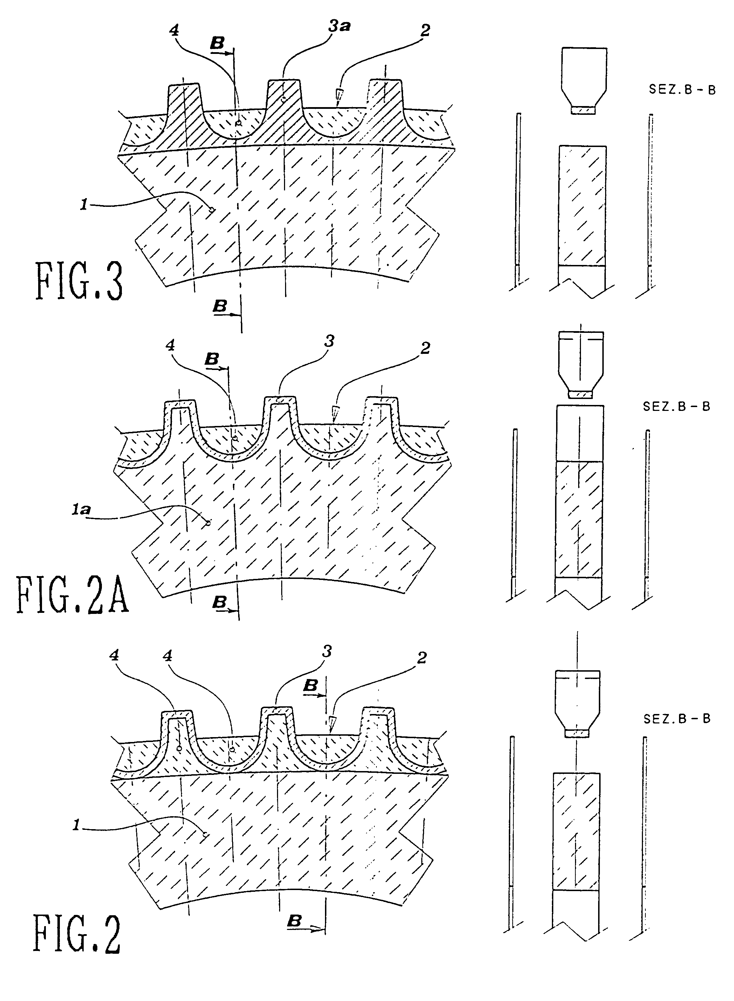

In the embodiment shown in figs. 1 and 2, the disk 1 has a circular smooth contour, and the sheet metal toothing 3 is suitably shaped and is associated thereto through a filling of resin 4.

In the variant of this embodiment, shown in fig. 2A, the disk 1 has instead a toothed contour, along which the suitably shaped sheet metal toothing 3 is directly applied and then anchored by means of the resin 4.

Finally, in the second embodiment of the gearwheel shown in fig. 3, the disk 1 has again a circular smooth contour, along which there is applied a circular metallic toothed profile 3a with solid teeth, which is then outwardly sealed with resin 4.

The disk 1 of synthetic material is usually obtained by shearing - or other type of machining - from a plate or slab, and the disks 2 of carbon fibre are preferably obtained by being cut out from a fabric pre-soaked in said fibre.

Preferably, as shown in figs. 2 and 3, the resin 4 partially fills the grooves formed between the teeth, so as to create a positive bond between the sheet metal toothing 3 - or toothed profile 3a - and the core disk 1. For this purpose, the disks 2 have a diameter substantially corresponding to the root diameter of the finished gearwheel teeth, and thus slightly wider than the teeth base diameter of the core disk 1; this allows to form containment walls for the epoxy resin filling the grooves between the teeth. Furthermore - as can be seen from the cross sections B-B of figs. 2, 2A and 3 - the profile of the toothings 3 and 3a, to be associated to the disk 1, is tapered at the base, so as to bury in the most efficient way the teeth in the resin 4.

The gearwheel thus obtained fully accomplishes the objects of the present invention, in that it provides a perfect rigidity and dimensional stability, with a great lightness - substantially determined by the composite sandwich structure with carbon fibre - as well as a sufficient wear resistance, ensured by the sheet metal toothing meant to act directly on the gripper strap.

According to a preferred embodiment of the invention, the gearwheel can be made even lighter by forming holes 5 into the thickness of the disk 1 and of the two disks 2. Such holes can be formed, for example, by punching after hardening of the resin. The same technique could be used to form a central through hole 6 in order to key the gearwheel on its support shaft (not shown).

Alternatively - so as not to interrupt the continuity of the carbon fibres - the holes 5 in the two disks 2 could be formed, before hardening of the resin, by suitably widening the meshes of the carbon fibre according to known techniques.

Moreover, the bond between the disks 2 and the core disk 1 could be further ensured by means of rivets, obtained thanks to hardening by polymerization of the resin penetrated into tiny holes 7 formed, in suitable positions, into the disk 1 and into the two disks 2.

The gearwheel according to the present invention can be constructed using the following method.

A first disk 2 of carbon fibre, or of fiberglass, is introduced into a suitable substantially circular die. The metal toothing is then inserted into the die and caused to adhere to its suitably shaped periphery. Subsequently, also the core disk 1 and the second disk 2 are placed therein. The die is then closed and epoxy resin (or another synthetic resin) is injected therein, so as to impregnate the two disks 2 and the core disk 1, and partially fill the grooves formed between the teeth of the metal toothing and the spaces between said teeth and the two disks of carbon fibre. A suitable thermal treatment is finally carried out on the die to cause the thermosetting of the resin and complete its polymerization, so that it may possess the required mechanical characteristics.

According to a preferred embodiment, lightening holes 5 are then also formed into the thickness of the disks 1 and 2.

It is anyhow understood that the invention is not limited to the particular embodiments described heretofore, which merely represent non-limiting examples of its scope, but that a number of variants can be introduced, all within reach of a person skilled in the art, without thereby departing from the scope of the invention itself.

In particular, though reference has preferably been made to disks 2 of carbon fibre, it is possible - by suitably adjusting the thicknesses and using a suitable synthetic resin - to adopt also disks of fiberglass, or other light fibres, or disks of a metallic film or of light metal alloys, already known in the technology of composite laminates.

The same applies to the disk 1 which, instead of being made from a low-density microcellular synthetic material, could be obtained - with equally good results - from a light material (either synthetic or papery, or even a light metal alloy) having a transversal honeycomb structure.

## Claims

1. Gearwheel of composite structure to control the motion of the gripper straps in looms, **characterized in that** it comprises a composite carrying structure, obtainable by sandwich interposition of a disk (1) of highly resisting light material between two disks (2) of carbon fibre, or of fiberglass, or of a metallic film, and a circular metal toothing (3, 3a) applied along the periphery of said disk (1) of highly resisting light material, the bond between said disks (1, 2) and with said metal toothing (3, 3a) being ensured by a synthetic resin (4).

2. Gearwheel as in claim 1), wherein said disk (1) of highly resisting light material is made from a low-density microcellular synthetic material.

3. Gearwheel as in claim 1), wherein said disk (1) of highly resisting light material is made from a light material having a transversal honeycomb structure.

4. Gearwheel as in claim 3), wherein said material is a light metal alloy.

5. Gearwheel as in claims 1) to 4), wherein said resin (4) partially englobes said metal toothing (3), filling the grooves formed between the teeth and said disks (2) of carbon fibre or of fiberglass.

6. Gearwheel as in claims 1) to 5), wherein said disk (1) of highly resisting light material has a smooth contour, and said metal toothing (3) is formed by a suitably shaped metal sheet associated to the smooth contour of said disk (1).

7. Gearwheel as in claims 1) to 5), wherein said disk (1) of highly resisting light material has a toothed contour, and said metal toothing (3) is formed by a suitably shaped metal sheet adhering to the toothed contour of said disk (1).

8. Gearwheel as in claims 1) to 5), wherein said disk (1) of highly resisting light material has a smooth contour, and said metal toothing is formed by a circular metallic toothed profile (3a) with solid teeth adhering to the smooth contour of said disk (1).

9. Gearwheel as in claims 6) to 8), wherein said metal toothing (3), or said toothed profile (3a), are tapered at the base.

10. Gearwheel as in any one of the previous claims, wherein said disks (1, 2) comprise lightening holes (5).

11. Gearwheel as in claim 10), wherein said lightening holes (5) are formed by punching.

12. Method to construct a gearwheel of composite structure to control the motion of the gripper straps in looms, **characterized in that** a metal toothing (3, 3a) is placed into a circular die, along its periphery, into the die there being positioned two disks (2) of carbon fibre, or of fiberglass, or of a metallic film, with the interposition of a disk (1) of highly resisting light material, and a synthetic resin (4) being subsequently injected into the die, so as to impregnate said disks (1, 2) and to at least partially fill the grooves formed between the teeth of the metal toothing (3, 3a) and the spaces between said teeth and the disks (2) of carbon fibre.

13. Method as in claim 12), wherein lightening holes (5) are moreover formed into the thickness of said disks (1, 2).

## Patentansprüche

1. Zahnrad mit Verbundstruktur zur Steuerung der Bewegung der Greiferbänder in Webstühlen, **dadurch gekennzeichnet, daß** es eine Verbund-Tragstruktur aufweist, erhältlich durch eine sandwichartige Zwischenanordnung einer Scheibe (1) aus einem hochwiderstandsfähigen leichten Material zwischen zwei Scheiben (2) aus Kohlefaser oder Glasfaser oder einem metallischen Film, wobei eine kreisförmige metallische Verzahnung (3, 3a) entlang des Umfangs der genannten Scheibe (1) aus hochwiderstandsfähigem leichten Material aufgebracht ist und die Verbindung zwischen den beiden Scheiben (1, 2) und mit der metallischen Verzahnung (3, 3a) durch ein Kunstharz (4) gewährleistet ist.

2. Zahnrad nach Anspruch 1, **dadurch gekennzeichnet, daß** die genannte Scheibe (1) aus hochwiderstandsfähigem leichten Material aus einem mikrozellularen Kunststoffmaterial geringer Dichte hergestellt ist.

3. Zahnrad nach Anspruch 1, **dadurch gekennzeichnet, daß** die genannte Scheibe (1) aus hochwiderstandsfähigem leichten Material aus einem leichten Material mit einer Wabenstruktur in Querrichtung hergestellt ist.

4. Zahnrad nach Anspruch 3, **dadurch gekennzeichnet, daß** das genannte Material eine Leichtmetallegierung ist.

5. Zahnrad nach einem der Ansprüche 1 bis 4, **dadurch gekennzeichnet, daß** das genannte Harz (4) teilweise die genannte metallische Verzahnung (3) umschließt, wobei die Nuten ausgefüllt sind, die zwischen den Zähnen und den genannten Scheiben (2) aus Kohlefaser oder Glasfaser gebildet sind.

6. Zahnrad nach einem der Ansprüche 1 bis 5, **dadurch gekennzeichnet, daß** die genannte Scheibe (1) aus hochwiderstandsfähigem leichten Material eine glatte Kontur aufweist, wobei die genannte metallische Verzahnung (3) durch eine in geeigneter Weise geformte Metallplatte bzw. ein Metallblech ausgebildet ist, die der glatten Kontur der Scheibe (1) zugeordnet ist.

7. Zahnrad nach einem der Ansprüche 1 bis 5, **dadurch gekennzeichnet, daß** die Scheibe (1) aus hochwiderstandsfähigem leichten Material eine gezahnte Kontur aufweist, wobei die metallische Verzahnung (3) durch eine in geeigneter Weise geformte Metallplatte bzw. ein Metallblech gebildet ist, das an der gezahnten Kontur der Scheibe (1) haftet bzw. klebt.

8. Zahnrad nach einem der Ansprüche 1 bis 5, **dadurch gekennzeichnet, daß** die Scheibe (1) aus hochwiderstandsfähigem leichten Material eine glatte Kontur aufweist, wobei die genannte metallische Verzahnung durch ein kreisförmiges, metallisches gezahntes Profil (3a) mit festen Zähnen gebildet ist, das an der glatten Kontur der genannten Scheibe (1) haftet bzw. klebt.

9. Zahnrad nach einem der Ansprüche 6 bis 8, **dadurch gekennzeichnet, daß** die metallische Verzahnung (3) oder das gezahnte Profil (3a) an der Basis konisch zulaufen.

10. Zahnrad nach einem der vorangehenden Ansprüche, **dadurch gekennzeichnet, daß** die Scheiben (1, 2) Löcher (5) zur Gewichtseinsparung aufweisen.

11. Zahnrad nach Anspruch 10, **dadurch gekennzeichnet, daß** die Löcher (5) zur Gewichtseinsparung durch Stanzen hergestellt sind.

12. Verfahren zum Herstellen eines Zahnrads mit Verbundstruktur, um die Bewegung von Greiferbändern in Webstühlen zu steuern, **dadurch gekennzeichnet, daß** eine metallische Verzahnung (3, 3a) in ein kreisförmiges Formwerkzeug eingelegt wird, wobei entlang seines Umfangs in dem Formwerkzeug zwei Scheiben (2) aus Kohlefaser oder Glasfaser oder aus einem metallischen Film positioniert sind, wobei eine Scheibe (1) aus hochwiderstandsfähigem leichten Material zwischengelegt ist, und wobei ein Kunstharz (4) anschließend in das Formwerkzeug eingespritzt wird, um die genannten Scheiben (1, 2) zu imprägnieren und um die Nuten, die zwischen den Zähnen der metallischen Verzahnung (3, 3a) ausgebildet sind, und die Zwischenräume zwischen den Zähnen und den Scheiben (2) aus Kohlefaser zumindest teilweise auszufüllen.

13. Verfahren nach Anspruch 12, **dadurch gekennzeichnet, daß** durch die Dicke der genannten Scheiben (1, 2) hindurch Löcher (5) zur Gewichtseinsparung ausgebildet sind.

## Revendications

1. Roue dentée de structure composite pour commander le mouvement des bandes à pinces dans des métiers, **caractérisée en ce qu'**elle comprend une structure de support composite, pouvant être obtenue en prenant en sandwich un disque (1) d'un matériau léger extrêmement résistant entre deux disques (2) de fibre de carbone, ou de fibre de verre, ou d'un film métallique, et une denture de métal circulaire (3, 3a) appliquée le long de la périphérie dudit disque (1) de matériau léger extrêmement résistant, la liaison entre lesdits disques (1, 2) et avec ladite denture de métal (3, 3a) étant garantie par une résine synthétique (4).

2. Roue dentée selon la revendication 1, dans laquelle ledit disque (1) de matériau léger extrêmement résistant est constitué d'un matériau synthétique microcellulaire à faible densité.

3. Roue dentée selon la revendication 1, dans laquelle ledit disque (1) de matériau léger extrêmement résistant est constitué d'un matériau léger ayant une structure transversale en nid d'abeilles.

4. Roue dentée selon la revendication 3, dans laquelle ledit matériau est un alliage de métal léger.

5. Roue dentée selon l'une des revendications 1 à 4, dans laquelle ladite résine (4) englobe en partie ladite denture de métal (3), remplissant les rainures formées entre les dents et lesdits disques (2) de fibre de carbone ou de fibre de verre.

6. Roue dentée selon l'une des revendications 1 à 5, dans laquelle ledit disque (1) de matériau léger extrêmement résistant a un contour lisse, et ladite denture de métal (3) est formée par une feuille de métal façonnée de manière appropriée associée au contour lisse dudit disque (1).

7. Roue dentée selon l'une des revendications 1 à 5, dans laquelle ledit disque (1) de matériau léger extrêmement résistant a un contour denté, et ladite denture de métal (3) est formée par une feuille de métal façonnée de manière appropriée adhérant au contour denté dudit disque (1).

8. Roue dentée selon l'une des revendications 1 à 5, dans laquelle ledit disque (1) de matériau léger extrêmement résistant a un contour lisse, et ladite denture de métal est formée par un profil denté métallique circulaire (3a) avec des dents pleines adhérant au contour lisse dudit disque (1).

9. Roue dentée selon l'une des revendications 6 à 8, dans laquelle ladite denture de métal (3), ou ledit profil denté (3a), est conique à la base.

10. Roue dentée selon l'une des revendications précédentes, dans laquelle lesdits disques (1, 2) comprennent des trous d'allégement (5).

11. Roue dentée selon la revendication 10, dans laquelle lesdits trous d'allégement (5) sont formés par poinçonnage.

12. Procédé pour construire une roue dentée de structure composite pour commander le mouvement des bandes à pinces dans des métiers, **caractérisé en ce qu'**une denture de métal (3, 3a) est placée dans un moule circulaire, le long de sa périphérie, dans le moule étant placés deux disques (2) de fibre de carbone, ou de fibre de verre, ou d'un film métallique, un disque (1) de matériau léger extrêmement résistant étant intercalé, et une résine synthétique (4) étant ensuite injectée dans le moule, de manière à imprégner lesdits disques (1, 2) et remplir au moins en partie les rainures formées entre les dents de la denture de métal (3, 3a) et les espaces entre lesdites dents et les disques (2) de fibre de carbone.

13. Procédé selon la revendication 12, dans lequel des trous d'allégement (5) sont en outre formés dans l'épaisseur desdits disques (1, 2).
